# EUROPEAN PATENT APPLICATION

(11) **EP 4 020 001 A1**
(43) Date of publication of application: **29.06.2022**
(21) Application number: 20855137.4
(22) Date of filing: 01.07.2020
(51) Int. Cl.: G01S 7/36, G01S 13/95

(54) **ANALYSIS DEVICE, ANALYSIS METHOD, AND RADAR DEVICE**

(30) Priority: 20.08.2019 JP 2019150216
(71) Applicant: Toshiba Infrastructure Systems & Solutions Corporation, Kawasaki-shi, Kanagawa 212-0013 (JP)
(72) Inventor: KIDA, Satoshi, Kawasaki-shi, Kanagawa 212-0013 (JP); WADA, Masakazu, Kawasaki-shi, Kanagawa 212-0013 (JP); ADACHI, Tomoko, Tokyo 105-0023 (JP)
(74) Representative: Hoffmann Eitle
(86) International application number: PCT/JP2020/025825
(87) International publication number: WO 2021/033437

(57) **Abstract**

According to one embodiment, an analysis apparatus includes an interface, a signal receiver and an analysis processor. The interface acquires a received signal of a radar apparatus which transmits and receives a radar signal. The signal receiver detects a preamble part of a wireless LAN packet from the acquired received signal, and detect radio wave interference due to the wireless LAN in a band of the received signal. The analysis processor , when the radio wave interference is detected, transmits to the radar apparatus radar control information for controlling a radio wave source which causes the radio wave interference.

## Description

### FIELD

Embodiments described herein relate generally to an analysis apparatus, an analysis method, and a radar apparatus.

### BACKGROUND

Wireless communication devices represented by a wireless LAN (Local Area Network) have been widely used. A use band of this type of communication device partially overlaps with a use band of a radar apparatus represented by a weather radar. Therefore, a technique for detecting radio interference and a technique for reliably suppressing it when it is detected are required. For example, dynamic frequency selection (DFS) is known as a measure for avoiding radio interference, and such a function is implemented on recent wireless communication devices. An access point (master station) of a wireless LAN that implements this function immediately stops upon detecting a radar signal, and moves the communication frequency to another frequency channel.

Further, there is a technique in which a radar apparatus that detects a wireless LAN signal transmits a pulse pattern for causing a wireless LAN device to perform a DFS operation.

### CITATION LIST

### PATENT LITERATURE

[Patent Literature 1] Japanese Patent No. 6383134

### SUMMARY

### TECHNICAL PROBLEM

A pulse pattern used in radar differs depending on the country and region. Thus, a pulse pattern of a radar used in a DFS test is defined for each country and region. Further, a radar signal detection algorithm is dependent on the actual implementation. Therefore, it is not guaranteed that a master station of a wireless LAN designated in each country or region performs a DFS operation with a pulse pattern other than the one specified by the DFS test of the corresponding country or region.

On the other hand, a radar apparatus side handles a signal having a narrower band than a wireless LAN using a channel width of 20 MHz or more, such as 10 MHz width or 5 MHz width. Thus, when detecting a wireless LAN signal using an antenna of a radar apparatus on the radar apparatus side, only a signal having a width of up to 20 MHz can be received. That is, even if the radar apparatus has a function of analyzing a received signal of the wireless LAN, it cannot decode the wireless LAN signal using channel bonding (also referred to as bonding).

Accordingly, in the existing technology, even if a wireless LAN signal is observed on a 20 MHz channel, as only detection of whether interference is present or not is performed, it is difficult to specify that the interference is caused by the wireless LAN signal.

Note that bonding is a technique of expanding a use band between a master station and a slave station of a wireless LAN over a 20 MHz channel that is a standard for transmitting a Beacon frame, etc. That is, when there is an empty space (when a carrier sense is performed and it is determined to be in an idle state) in a band, a plurality of channels of 20 MHz unit are connected, so that a use band of an arbitrary radio link can be expanded (depending on the corresponding band of the master station and the slave station).

A frame transmitted to an unspecified number of terminals or a frame transmitted when a corresponding band of a communication partner is not known, such as a Beacon frame, a Probe Request frame, and a Probe Response frame, is transmitted so as to be received and decoded on a channel of at least 20 MHz. Basically, these frames are transmitted only on the channel of 20 MHz, which is the standard specified by the master station of the wireless LAN. (In some frequency bands, it is permissible to simultaneously transmit these frames in 20 MHz channels to be bonded, but currently it is not permissible in the 5 GHz band.) Accordingly, if this 20 MHz channel, which is the standard specified by the master station of the wireless LAN, is the same as the frequency observed by the radar apparatus, then these frames can be received and decoded. However, these frames are not always transmitted at the same frequency as that observed by the radar apparatus.

Accordingly, an object of the present invention is to provide an analysis apparatus, an analysis method, and a radar apparatus capable of reliably detecting a radio interference source.

### SOLUTION TO PROBLEM

In general, according to one embodiment, an analysis apparatus includes an interface, a signal receiver and an analysis processor. The interface acquires a received signal of a radar apparatus which transmits and receives a radar signal. The signal receiver detects a preamble part of a wireless LAN packet from the acquired received signal, and detect radio wave interference due to the wireless LAN in a band of the received signal. The analysis processor , when the radio wave interference is detected, transmits to the radar apparatus radar control information for controlling a radio wave source which causes the radio wave interference.

### BRIEF DESCRIPTION OF THE DRAWINGS

FIG. 1 is a functional block diagram showing an example of a radar apparatus and an analysis apparatus according to an embodiment.
FIG. 2 is a functional block diagram showing an example of a wireless LAN analysis apparatus 20.
FIG. 3 is a diagram showing an example of a flow of processing by the wireless LAN analysis apparatus 20.
FIG. 4 is a flowchart showing an example of a processing procedure related to detection of a wireless LAN signal.
FIG. 5 is a diagram for explaining an order of change of a reception channel.
FIG. 6 is a diagram for explaining a structure of a management frame of a wireless LAN signal.
FIG. 7 is a diagram showing a structure of a Frame Body field of a beacon frame.
FIG. 8 is a diagram showing a structure of a Frame Body field of a probe response frame.
FIG. 9 is a diagram showing item information included in Frame Body Field for each communication protocol.
FIG. 10 is a flowchart showing an example of a procedure for outputting a detection result of a wireless LAN signal as a log.
FIG. 11 is a diagram showing an example of a detection result of a wireless LAN signal.
FIG. 12 is a flowchart showing an example of a processing procedure related to creation of statistical data.
FIG. 13 is a diagram showing an example of the statistical data.
FIG. 14 is a diagram showing an example of the statistical data.
FIG. 15 is a diagram showing an example of the statistical data.
FIG. 16 is a flowchart showing an example of a procedure for detecting the wireless LAN signal by a fixed reception channel.
FIG. 17 is a diagram showing a relationship between an 802.11a preamble and a MAC frame within a wireless LAN signal in a bonded channel.
FIG. 18 is a diagram showing channel mapping in W52, W53, and W56.
FIG. 19 is a diagram showing a Japanese DFS pulse pattern.
FIG. 20 is a diagram showing a DFS pulse pattern of the US FCC.
FIG. 21 is a diagram showing a DFS pulse pattern of the European ETSI.
FIG. 22 is a diagram showing an example of an observation schedule at the time of normal observation in a weather radar 1.
FIG. 23 is a diagram showing an example of an observation schedule when interference occurs due to the wireless LAN signal.
FIG. 24 is a diagram showing an example of a flow of switching an observation schedule between a normal time and a time when interference occurs.

### DETAILED DESCRIPTION

Next, an embodiment will be described with reference to the drawings. In the embodiment, a radio wave received by a radar apparatus is analyzed to detect presence or absence of radio wave interference from a wireless communication device. When radio wave interference is detected, a dedicated pulse pattern is transmitted from the radar apparatus, and the wireless communication device as a radio wave source which causes the radio wave interference is controlled to operate DFS. Hereinafter, a novel technique of reliably detecting radio wave interference or a radio wave interference source even in a radio wave environment including a bonded channel will be described.

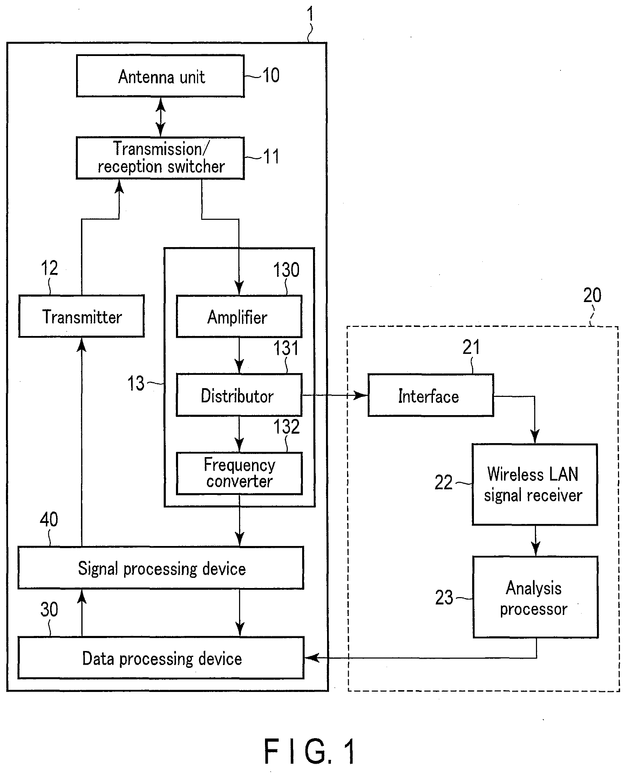

FIG. 1 is a functional block diagram showing an example of the radar apparatus and an analysis apparatus according to the embodiment. In FIG. 1, a wireless LAN analysis apparatus 20 is detachably connected to a weather radar 1 via cables (coaxial cable, LAN cable, power cable, etc.). As the weather radar 1, for example, a dual polarization weather radar or a multi-parameter phased array weather radar (MP-PAWR) can be assumed.

The weather radar 1 includes an antenna unit 10, a transmission/reception switcher 11, a transmitter 12, a received signal processing device 13, a signal processing device 40, and a data processing device 30. The antenna unit 10 is, for example, a parabolic antenna or a phased array antenna having a plurality of antenna elements.

The transmission/reception switcher 11 switches transmission/reception of a radio wave signal. That is, the transmission/reception switcher 11 transfers a radar transmission pulse from the transmitter 12 to the antenna unit 10, or transfers a radio wave signal received by the antenna unit 10 to the received signal processing device 13.

The transmitter 12 generates a transmission pulse (radar signal) corresponding to a pulse pattern output from the signal processing device 40 and outputs the transmission pulse to the antenna unit 10. In addition to a pulse pattern necessary for normal operation (detection, observation, and ranging) for radar operation, the signal processing device 40 outputs a pulse pattern relating to a function of avoiding radio wave interference to the transmitter 12.

The received signal processing device 13 executes reception processing of the radio wave signal received by the antenna unit 10, and outputs it to the signal processing device 40. The received signal received by the antenna unit 10 may include not only an echo signal of the transmitted radar signal but also a radio wave signal transmitted from a wireless communication device such as an access point (AP) of a wireless LAN. Hereinafter, such radio wave signals will be collectively referred to as wireless LAN signals. Such wireless LAN signals may cause radio wave interference with the weather radar 1.

The received signal processing device 13 includes a low-noise amplifier 130, a distributor 131, and a frequency converter 132. The low-noise amplifier 130 amplifies the radio wave signal received by the antenna unit 10. In the embodiment, it is assumed that, for example, a wireless LAN signal having a signal level of -100 dBm to -50 dBm in the vicinity of 1.2 MHz is input to the amplifier 130. The distributor 131 distributes a received signal output from the low-noise amplifier 130 into two systems, and outputs the signals to the frequency converter 132 and the wireless LAN analysis apparatus 20, respectively. The frequency converter 132 performs frequency conversion processing of one of the distributed received signals.

The received signal processing device 13 includes a connector capable of connecting a coaxial cable, a LAN cable, and a power cable. The connector is formed on a front panel or a rear panel, etc. The coaxial cable transmits the other received signal distributed by the distributor 131 to the wireless LAN analysis apparatus 20. In particular, since signals of both of an H system (horizontal polarization system) and a V system (vertical polarization system) are transmitted and output, a coaxial connector of two systems is formed.

The LAN cable connects the wireless LAN analysis apparatus 20 and a network device. A network connection setting with the weather radar 1 may be performed from the wireless LAN analysis apparatus 20 side. The power cable is connected to an uninterruptible power supply (UPS) to obtain power supply to the wireless LAN analysis apparatus 20 and the received signal processing device 13.

In accordance with control of the data processing device 30, the signal processing device 40 performs transmission/reception processing of signals necessary for a normal operation in operating the radar and transmission processing in the radio wave interference avoidance function according to the present embodiment. That is, the signal processing device 40 performs reception processing (digital processing) of a received signal necessary for the normal operation in operating the radar and transmission processing of an operation pulse pattern, and performs transmission processing of a pulse pattern (effective pulse pattern) in the radio wave interference avoidance function of the present embodiment.

The wireless LAN analysis apparatus 20 includes an interface 21, a wireless LAN signal receiver 22, and an analysis processor 23.

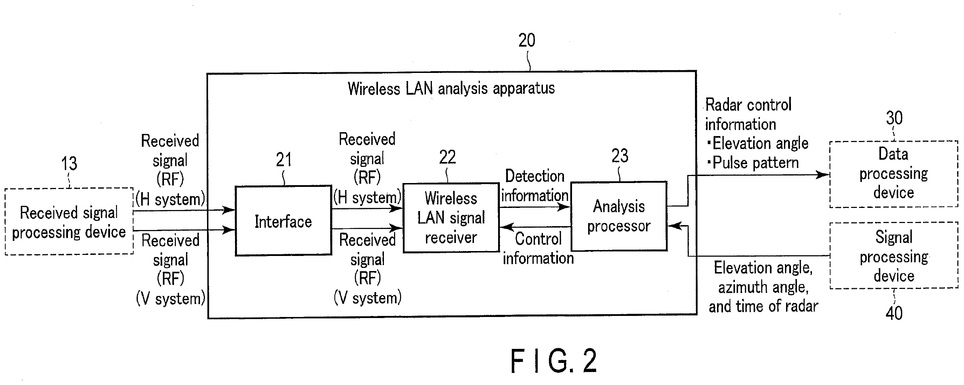

FIG. 2 is a functional block diagram showing an example of the wireless LAN analysis apparatus 20. In FIG. 2, a received signal of an RF band is input from the received signal processing device 13 of the weather radar 1 to the wireless LAN analysis apparatus 20. Also, an observation elevation angle, an observation azimuth angle, and an observation time of the weather radar 1 are input from the signal processing device 40 to the wireless LAN analysis apparatus 20. On the other hand, data of an elevation angle and a pulse pattern for causing the DFS of the wireless LAN to function are transmitted from the wireless LAN analysis apparatus 20 to the data processing device 30 of the weather radar 1.

In FIG. 2, the interface 21 acquires the received signal (RF) (H system, V system) branched from the received signal processing device 13, adjusts a reception level, etc., and transmits the received signal to the wireless LAN signal receiver 22. Since a polarization plane of the wireless LAN signal from the wireless LAN is not determined, it is desirable to analyze and avoid interference caused by both horizontal and vertical polarized waves. Therefore, in FIG. 2, received signals of both the H system and the V system are input to the wireless LAN analysis apparatus 20.

The wireless LAN signal receiver 22 receives the received signals (RF) (H system, V system) from the interface 21, analyzes the wireless LAN signals, and obtains detection information. The detection information may include, for example, a detection period, a MAC address, an SSID, a communication protocol, a country code, a received power level, a used channel, and wireless LAN detection information, etc. of the wireless LAN signal. This detection information is passed to the analysis processor 23.

The analysis processor 23 analyzes the detection information received from the wireless LAN signal receiver 22 to create statistical data. Further, the analysis processor 23 outputs a detection result as a log. When interference from the wireless LAN is detected, the analysis processor 23 creates radar control information for avoiding interference using the observation elevation angle, the observation azimuth angle, the time of the weather radar 1 acquired from the signal processing device 40 of the weather radar 1, and the detection information. This radar control information is passed to the data processing device 30. Further, the analysis processor 23 transmits the control information to the wireless LAN signal receiver 22, and controls an operation mode.

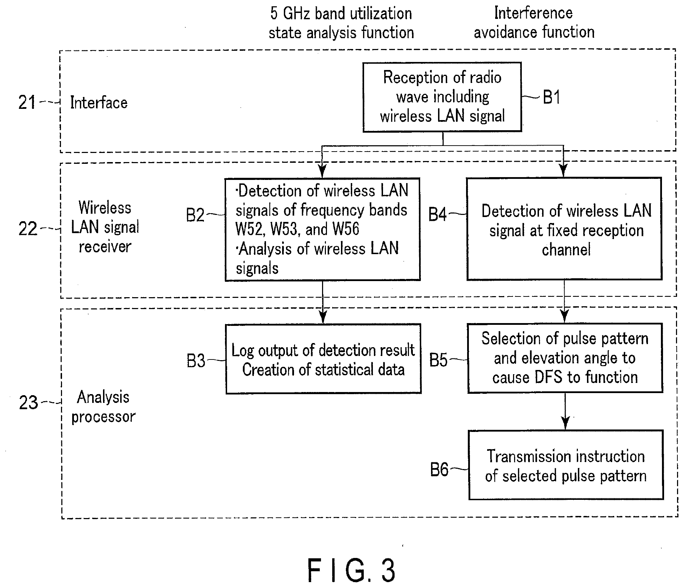

FIG. 3 is a diagram showing an example of a flow of processing performed by the wireless LAN analysis apparatus 20. The functions of the wireless LAN analysis apparatus 20 can be broadly divided into a [5 GHz band utilization state analysis function] and an [interference avoidance function]. The [5 GHz band utilization state analysis function] includes functions of blocks B2 and B3, and the [interference avoidance function] includes functions of blocks B4, B5, and B6. The wireless LAN signal receiver 22 processes the blocks B2 and B4, and the analysis processor 23 processes the blocks B3, B5, and B6. Further, the function of the block B1 is processed by the interface 21.

In the embodiment, a wireless LAN targeted for the [5 GHz band utilization state analysis function] and the [interference avoidance function] is assumed to be compliant with IEEE802.11a/n/ac/ax using a 5 GHz band and conform to the technical standards of Japan, the US FCC, and European ETSI. IEEE802.11ax is described on the basis of the standard draft, version 3.0, of June 2018, but if the frame configuration, etc. is updated in the latest standard draft or established standard, this may be adopted to assure compliance.

### <About 5GHz band utilization state analysis function>

This function grasps the utilization state of a 5 GHz band wireless LAN. That is, in addition to a reception function of a general wireless LAN access point, the present embodiment has the following functions.
(a) Change the reception channel according to a predesignated sequence.
(b) In the weather radar 1, detect a wireless LAN signal to create statistical data. Target frequencies are W52, W53, and W56.
(c) Output a detection result of the wireless LAN signal as a log.

In the block B1 of FIG. 3, a radio wave which may include a wireless LAN signal is taken into the weather radar 1 from the antenna unit 10 via a connection waveguide, etc., and subjected to processing such as high-frequency amplification by the received signal processing device 13 (FIG. 1). The interface 21 captures this received signal, and adjusts a reception level in accordance with an input level range of the wireless LAN signal receiver 22.

In the block B2, the wireless LAN signal receiver 22 detects a wireless LAN signal while switching a wireless LAN channel to, for example, each frequency band of W52, W53, and W56. Further, the wireless LAN signal receiver 22 extracts a media access control (MAC) address, an SSID, a communication protocol, a country code, and a used channel from a beacon frame or a probe response frame of the wireless LAN signal, and extracts a received power level from the received signal.

In the block B3, the analysis processor 23 combines the detected wireless LAN signal information (MAC address, SSID, communication protocol, country code, used channel, and received power level) with the elevation angle and the azimuth angle of the antenna unit 10 of the weather radar 1 to create statistical data. Also, a detection result of the wireless LAN is output to a log.

### <About interference avoidance function>

This function avoids an interference condition when interference from the wireless LAN is detected. That is, a signal received by the antenna unit 10 of the weather radar 1 is analyzed to specify an interfering wave from the wireless LAN, and based on that result, causes the DFS of the target wireless LAN to function.

In the block B4, the wireless LAN signal receiver 22 detects a wireless LAN signal at a reception channel of the wireless LAN corresponding to a frequency of a weather radar in operation in accordance with control information from the analysis processor 23.

In the block B5, the analysis processor 23 specifies the direction of the wireless LAN that causes interference by combining detection information of the wireless LAN signal with an elevation angle and an azimuth angle of the antenna unit 10 of the weather radar 1, and selects an elevation angle and a pulse pattern to cause the DFS of the wireless LAN to function. In the block B6, the analysis processor 23 instructs the data processing device 30 to transmit radio waves with the selected pulse pattern.

### <About implementation example of 5 GHz band utilization state analysis function>

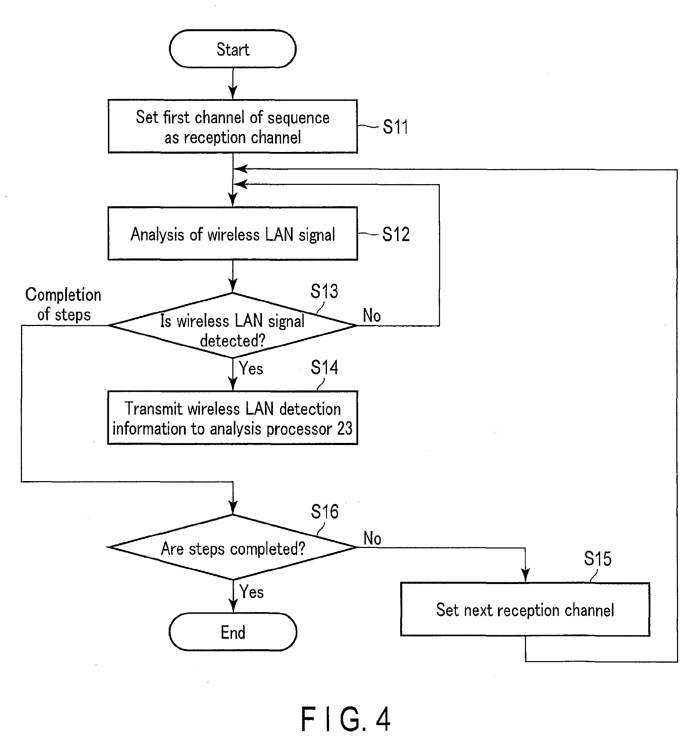

FIG. 4 is a flowchart showing an example of a processing procedure related to detection of a wireless LAN signal. A procedure for detecting a wireless LAN signal in the frequency bands W52, W53, and W56, for example, will be described. In the following procedure, a sequence of channels for receiving the wireless LAN signal is designated in advance, and the wireless LAN signal is analyzed while changing the reception channel at an arbitrary timing.

In FIG. 4, the wireless LAN analysis apparatus 20 sets the first channel of the sequence as a reception channel (step S11), and starts analysis of the wireless LAN signal (step S12). When the wireless LAN signal is detected (Yes in step S13), the wireless LAN signal receiver 22 transmits the detection information to the analysis processor 23 (step S14).

After a specified period of time (e.g., 10 minutes) has elapsed, the process of step S12 ends, and after the next reception channel is set (step S15), the process proceeds to step S12 again, and the analysis of the wireless LAN signal is repeated. When all of the steps have been completed (Yes in step S16), the sequence ends.

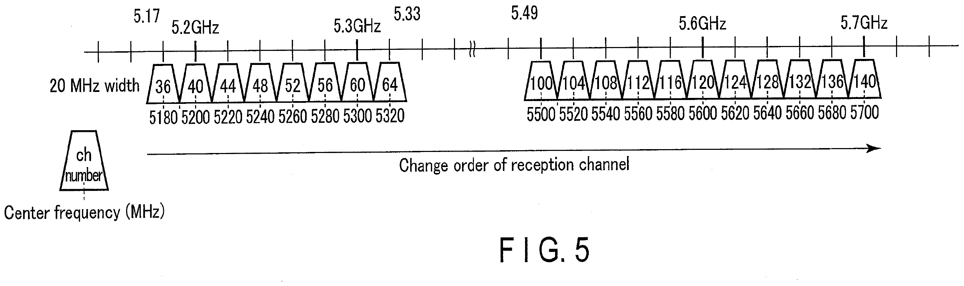

FIG. 5 is a diagram for explaining an order of change of a reception channel. As shown in FIG. 5, individual channels each having a width of 20 MHz are arranged in W52, W53, and W56. In the reception channel change sequence in the embodiment, 19 channels of the W52, W53, and W56 frequency bands, which are sequentially advanced from the low frequency 20 MHz band channel (Ch36) to Ch40, Ch44, ..., Ch140, are set at designated intervals.

### <About analysis of wireless LAN signal>

Next, analysis of the wireless LAN signal will be described. In the embodiment, a management frame of the wireless LAN signal is analyzed to extract detection information. The signal to be analyzed is a beacon frame or a probe response frame, and the target detection information is a MAC address, an SSID, a communication protocol, a country code, a used channel, and a received power level.

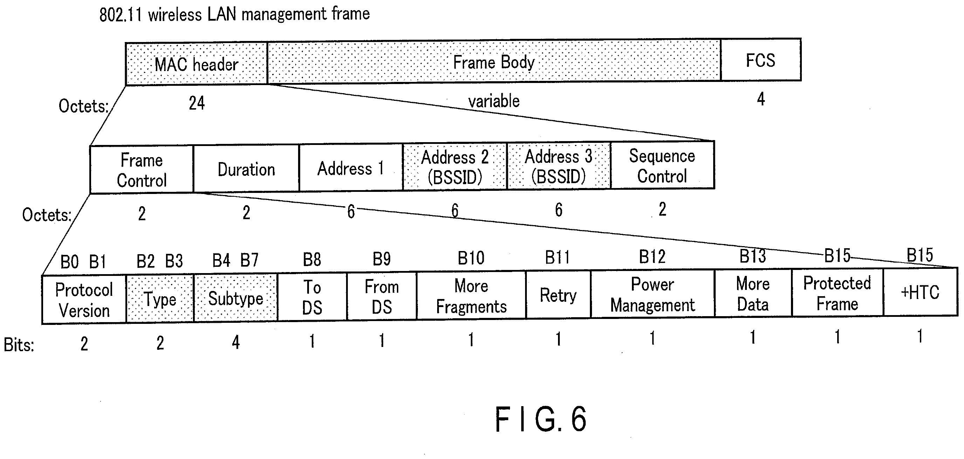

FIG. 6 is a diagram for explaining a structure of a management frame of a wireless LAN signal. The management frame includes a MAC header, a Frame Body, and a frame check sequence (FCS).

The MAC header stores a frame type (beacon or probe response) and a MAC address. The wireless LAN signal receiver 22 extracts this information from each field of a wireless LAN packet decoded from a received signal of the weather radar 1. The frame type can be extracted from the type and subtype in the MAC header.

A BSSID (Basic Service Set IDentification), which is a MAC address of a wireless LAN access point, can be used as the MAC address. The BSSID is stored in Address2 and Address3 in the MAC header, and can be extracted from these fields. The Frame Body is a field for storing information of an SSID, a country code, and a communication protocol. While a structure of the Frame Body for the beacon and the probe response differ, all the information necessary for detection is stored.

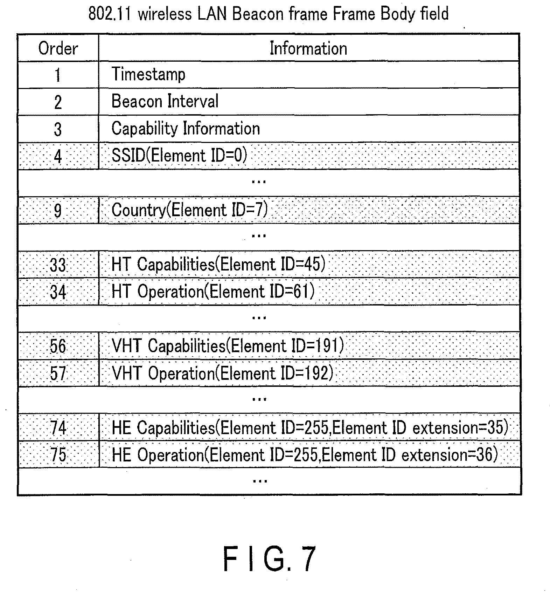

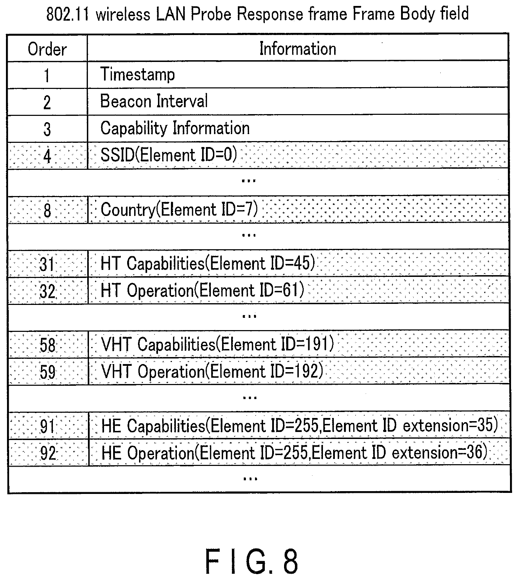

FIG. 7 is a diagram showing a structure of a Frame Body field of a beacon frame. FIG. 8 is a diagram showing a structure of a Frame Body field of a probe response frame. An SSID and a country code can be extracted from corresponding items in the Frame Body field. For the communication protocol, since the types of items included in the Frame Body field differ, each item has to be individually determined.

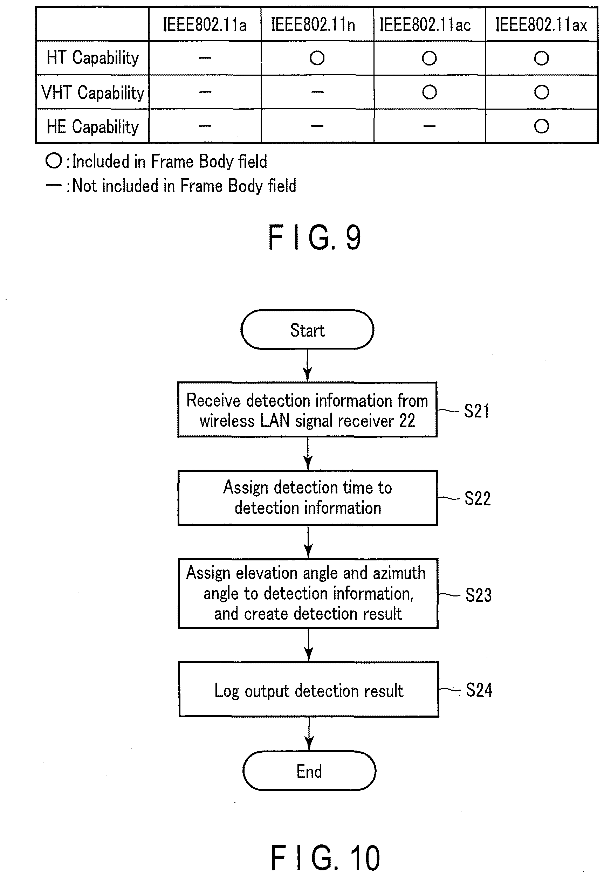

FIG. 9 is a diagram showing item information included in a Frame Body Field for each communication protocol common in a wireless LAN. A channel used by a wireless LAN can be determined from a reception channel. Further, if a channel with an increased bandwidth by bonding (channel bonding) is used, the channel can be extracted from the reception channel and items of an HT Operation, a VHT Operation, and an HE Operation. The received power level can be calculated from the received wireless LAN signal itself.

### <About log output of detection result and creation of statistical data>

FIG. 10 is a flowchart showing an example of a procedure of log outputting a detection result of a wireless LAN signal. When receiving detection information of a wireless LAN signal from the wireless LAN signal receiver 22 (step S21), the analysis processor 23 assigns a detection time to the received detection information (step S22). Further, the analysis processor 23 assigns an azimuth angle and an elevation angle of the weather radar 1 to the detection information based on the time information, and creates a detection result (step S23). The created detection result is output as log information (step S24).

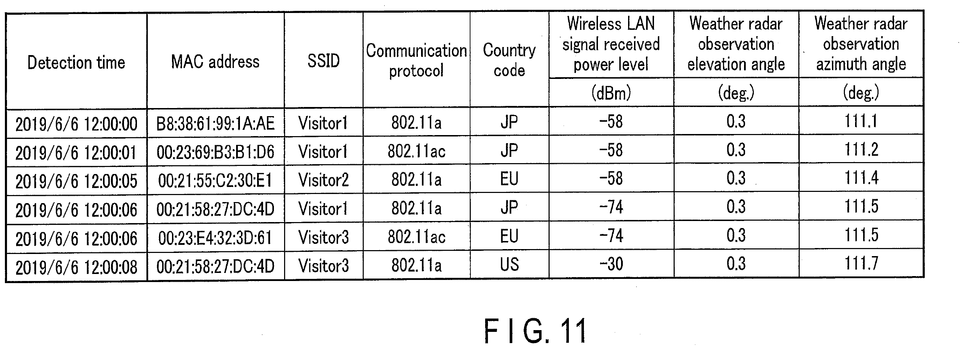

FIG. 11 is a diagram showing an example of a detection result of a wireless LAN signal. A MAC address, an SSID, a communication protocol, a country code, and a received power level of a detected wireless communication device (access point, etc.), and observation elevation angle and azimuth angle of the weather radar 1, are associated with a detection result at each time.

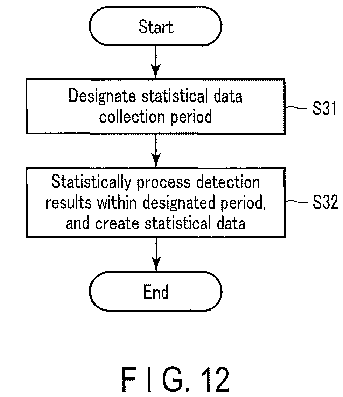

FIG. 12 is a flowchart showing an example of a processing procedure related to creation of statistical data. The wireless LAN analysis apparatus 20 receives designation of a collection period of statistical data (step S31), statistically processes detection results in the designated period, and creates the statistical data (step S32). The statistical processing includes, for example, a process of totaling the number of MAC addresses, the number of communication protocols, the number of country codes, and the number of used channels of the detection results within the designated period. Note that duplication of the same wireless LAN access point can be avoided based on the MAC address.

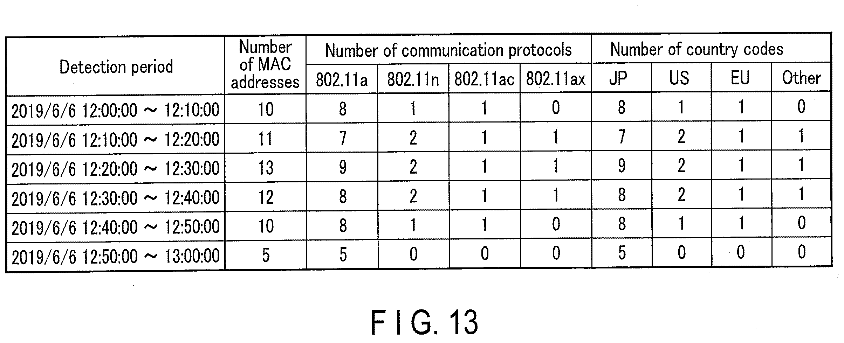

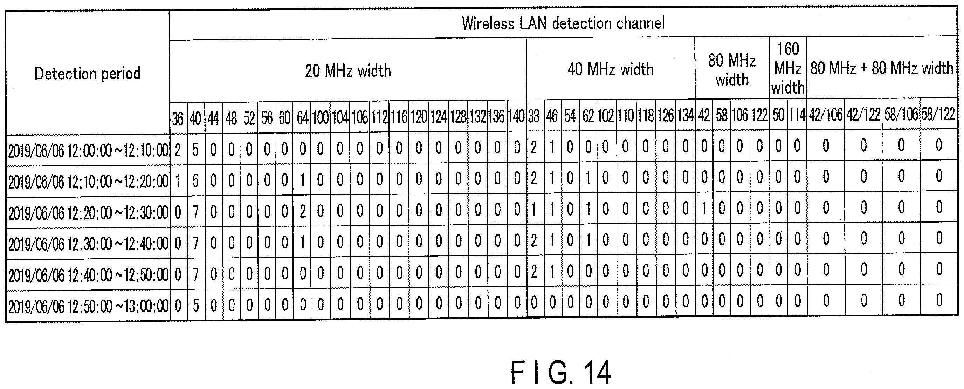

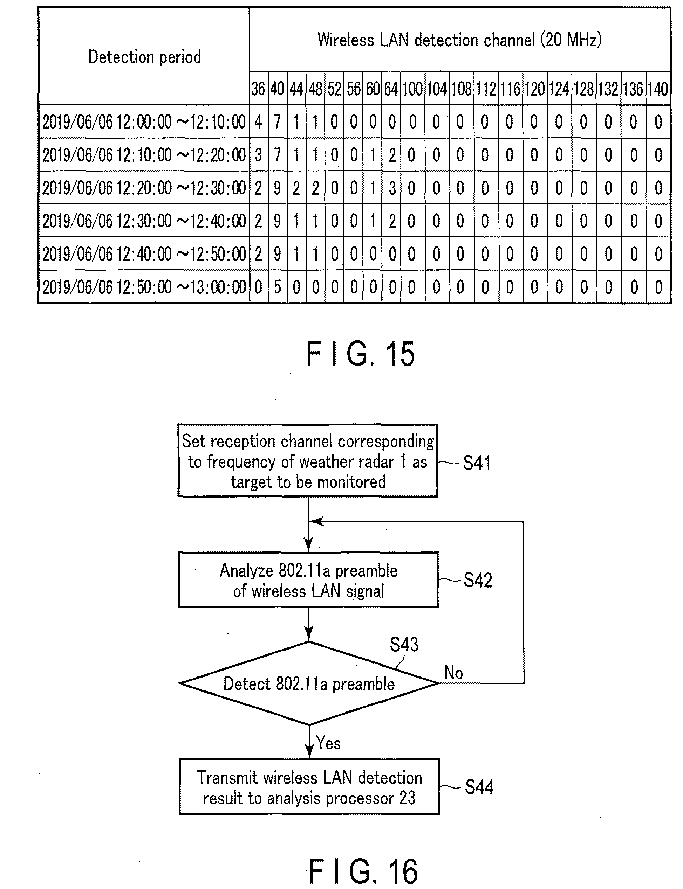

FIGS. 13 to 15 show examples of the statistical data. FIG. 13 shows a totaled result of the number of MAC addresses, the number of communication protocols, and the number of country codes. FIG. 14 shows statistics of the number of detected wireless LAN used channels for only a beacon and a probe response. FIG. 15 shows the number of wireless LAN used channels (a total number of channels in the 20 MHz width channels), and is statistical data obtained by taking into consideration a use state of each of the 20 MHz width channels when a plurality of channels are bonded and communicated.

### <About implementation example of interference avoidance function>

Next, an implementation example of the interference avoidance function will be described. First, detection of a wireless LAN signal by a fixed reception channel will be described.

FIG. 16 is a flowchart showing an example of a procedure for detecting a wireless LAN signal by a fixed reception channel. In FIG. 16, the wireless LAN analysis apparatus 20 fixes its own reception channel to a channel corresponding to a transmission frequency of the weather radar 1 (step S41). Next, the wireless LAN analysis apparatus 20 analyzes the presence or absence of an 802.11a preamble of a received wireless LAN signal (step S42). When the 802.11a preamble is detected, the wireless LAN analysis apparatus 20 transmits the detection result to the analysis processor 23 as wireless LAN detection information (step S44) .

In the embodiment, the wireless LAN signal receiver 22 detects the presence of interference due to the wireless LAN signal by detecting the IEEE802.11a preamble of the wireless LAN packet decoded from the received signal of the weather radar 1. That is, the wireless LAN signal receiver 22 monitors the presence or absence of reception of a preamble defined in a layer lower than a beacon or probe response monitored in the existing technology. In this way, it is possible to prevent interference in a bonded channel from being overlooked. Details will be described below.

The IEEE802.11a preamble is a bit string of a signal used for adjustment of automatic gain control, synchronization acquisition, etc. to be inserted at the head of a wireless LAN packet. In a narrow sense, the IEEE802.11a preamble refers to the leading 12 symbols (10 short symbols and 2 long symbols) of a wireless LAN packet. By detecting 12 symbols of this particular pattern, it can be determined that reception of a wireless LAN signal of a 5 GHz band IEEE802.11 system has started. In IEEE802.11n, IEEE802.11ac, and IEEE802.11ax (collectively referred to as IEEE802.11n/ac/ax), which have backward compatibility with IEEE802.11a, this short symbol portion is referred to as Legacy Short Training Field (L-STF), and the long symbol portion is referred to as Legacy Long Training Field (L-LTF). After these 12 symbols, a signal field of 10FDM (Orthogonal Frequency Division Multiplexing) symbol is followed. In a broad sense, a portion including the 12 symbols and this signal field is referred to as an IEEE802.11a preamble or a legacy preamble in IEEE802.11n/ac/ax. In IEEE802.11n, IEEE802.11ac, and IEEE802.11ax, this signal field portion is referred to as a Legacy SIGNAL Field (L-SIG). In the signal field, there is a field for notifying a transmission rate and a packet length. The former field name is RATE, and the latter field name is LENGTH. In the case of a wireless LAN signal of IEEE802.11a, RATE indicates a transmission rate of a packet portion following the signal field, and LENGTH indicates a length of a MAC frame stored in a wireless LAN packet. In the case of a wireless LAN signal of IEEE802.11n/ac/ax, RATE is fixed with binary phase shift keying (BPSK) at a coding rate of 1/2, and for LENGTH, a value adjusted so as to match an actual occupancy time length when an occupancy time length of a portion following L-SIG is calculated by that RATE is entered. Note that the signal field is modulated with BPSK at a coding rate of 1/2. A bonded channel is a channel in which a plurality of channels having a width of 20 MHz are bundled into a channel of a wireless LAN.

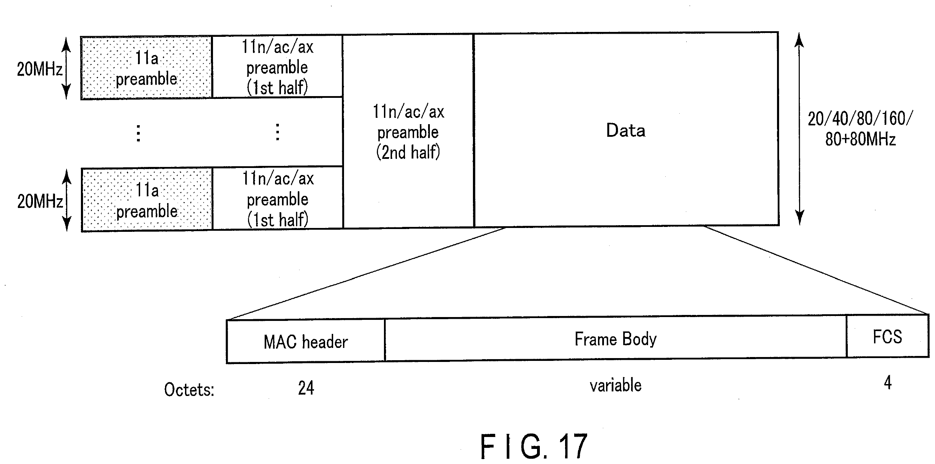

FIG. 17 is a diagram showing a relationship between an IEEE802.11a preamble and a MAC frame in a wireless LAN signal in a bonded channel. While the IEEE802.11a preamble is redundantly transmitted on each 20 MHz channel, a data portion (Data field) storing a MAC frame is transmitted in a band (20 MHz to 160 MHz) of the bonded channel. Here, a management frame (beacon frame, probe response frame) normally used for monitoring a wireless LAN is stored in the data portion.

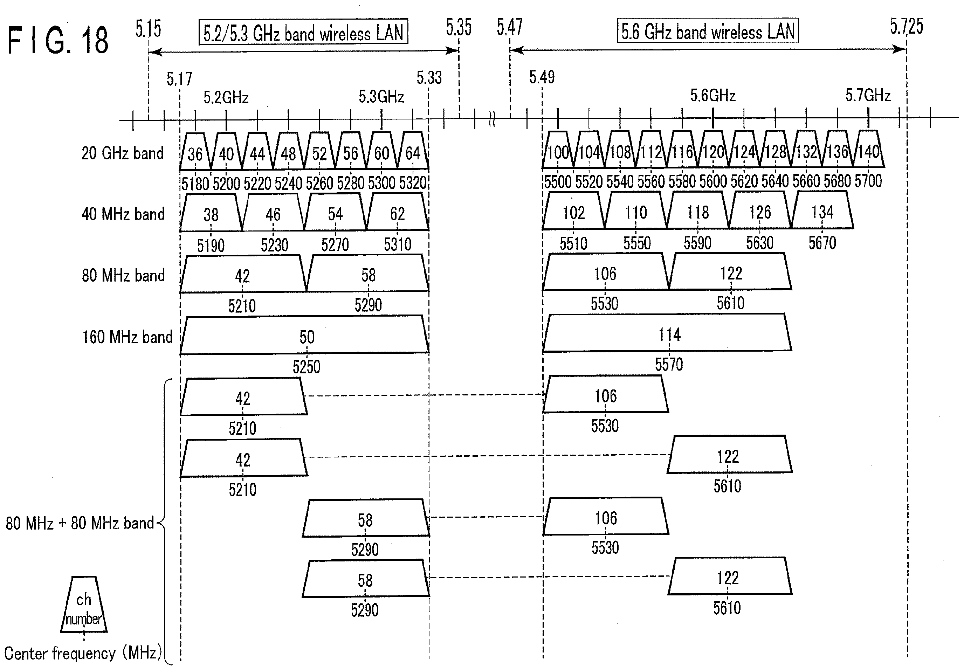

FIG. 18 is a diagram showing channel mapping in W52, W53, and W56. For example, Ch62 is a bonding of 40 MHz (20 MHz × 2 ch), and Ch50 is a bonding of 160 MHz (20 MHz × 8 ch). In addition, as in a case of bonding using both Ch58 and Ch122 present at the lowest level, use across frequency bands is also permitted.

Even when bonding is used as a wireless LAN system, a beacon or probe response is transmitted over a 20 MHz width channel without using a bonded channel. Moreover, there is no rule regarding which one of a plurality of channels to be bonded is used.

Thus, for example, when monitoring a beacon or probe response of a wireless LAN signal fixed at Ch64, if a wireless LAN access point uses a bonded channel having a bandwidth of 40 MHz or more, interference may be overlooked. That is, the beacon and the probe response may not necessarily be transmitted at Ch64, and may be transmitted at Ch36 or Ch128. Thus, it cannot be said that the known method that relies only on the beacon or the probe response can perform interference detection required for the interference avoidance function.

On the other hand, the IEEE802.11a preamble of the wireless LAN signal is the same for all the standards of IEEE802.11a/n/ac/ax, which are sequentially expanded to ensure backward compatibility, and is transmitted on all 20 MHz width channels in the bonded channels (Ch50, Ch58, Ch62, and Ch64). By using this, for example, it is possible to reliably detect interference in monitoring fixed at Ch64. In view of this point, the present inventors had the idea of detecting interference caused by a wireless LAN signal by monitoring a so-called legacy preamble field.

### <About selection of pulse pattern for causing DFS of wireless LAN to function>

The analysis processor 23 calculates an elevation angle and an azimuth angle of a wireless LAN access point causing interference from the observation elevation angle, azimuth angle, and time acquired from the weather radar 1, and a detection time of an 802.11a preamble of a wireless LAN signal. The analysis processor 23 generates radar control information to operate the weather radar 1 with a pulse pattern that causes DFS of a wireless LAN access point to function at an elevation angle at which interference occurs.

Since the 802.11a preamble of the wireless LAN signal does not include a communication protocol and a country code, such information cannot be known. Thus, in the embodiment, a DFS pulse pattern is adopted that is common to the technical standards of Japan, the US FCC, and European ETSI.

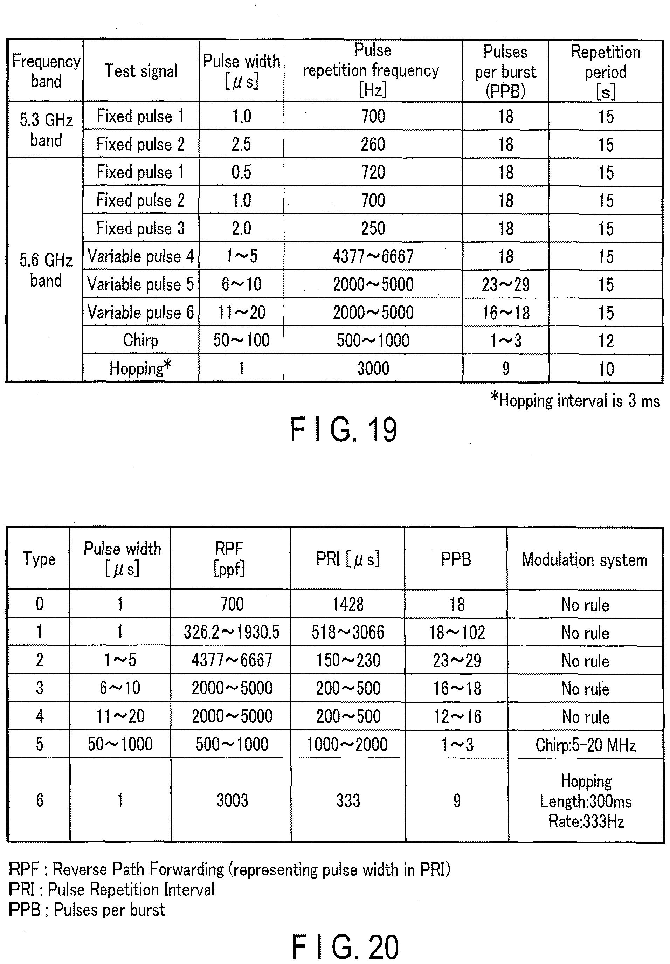

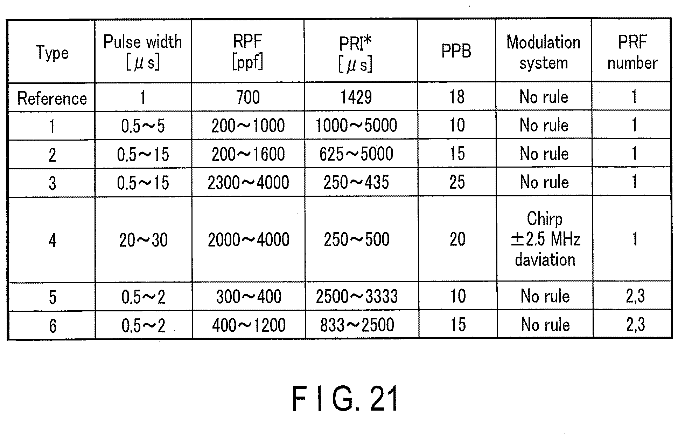

FIG. 19 shows the DFS pulse pattern of Japan. FIG. 20 shows the DFS pulse pattern of the US FCC. FIG. 21 shows the DFS pulse pattern of European ETSI. Of these, a pulse pattern having a PRF of 700 Hz and a pulse width of 1.0 µsec corresponds to a fixed pulse 1 of Japan, types 0 and 1 of the US FCC, and types of Reference, 1, 2, and 6 of the European ETSI, and the pulse pattern is thus adopted. A pulse pattern having a PRF of 260 Hz and a pulse width of 2.5 psec is not adopted because a period of time until a pulse per burst becomes 18 is long.

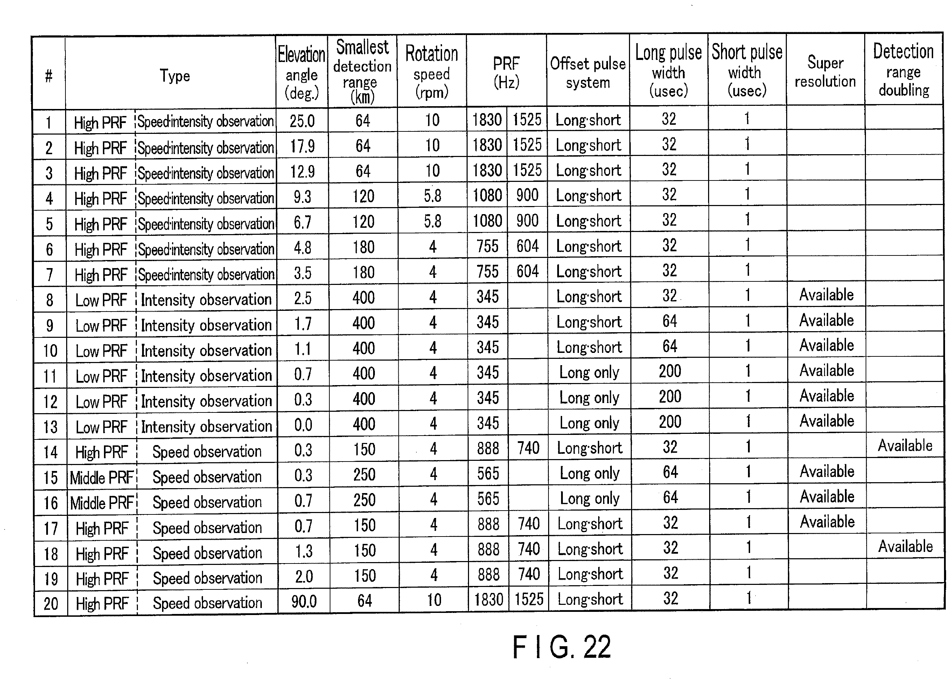

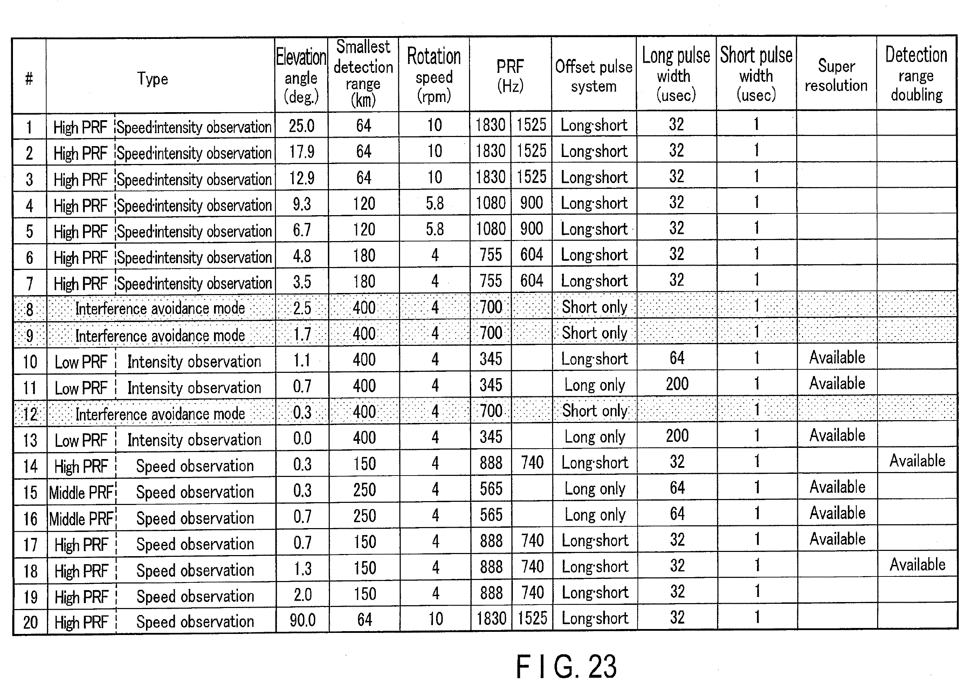

FIG. 22 shows an example of an observation schedule at a time of normal observation in the weather radar 1. FIG. 23 shows an example of an observation schedule when interference occurs due to a wireless LAN signal. As shown in FIG. 23, interference is observed at elevation angles of #8, #9, and #12. In this case, a pulse pattern having a PRF of 700 Hz and a pulse width of 1.0 usec is set in #8, #9, and #12 of the observation schedule at the time of normal observation (interference avoidance mode).

### <About transmission of selected pulse pattern>

The radar control information generated by the analysis processor 23 is transmitted to the data processing device 30. The data processing device 30 sets a transmission schedule of a pulse pattern selected according to the radar control information, and transmits that pulse pattern from the antenna unit 10. Since a wireless LAN access point which has received this causes DFS to function, radio wave interference is suppressed.

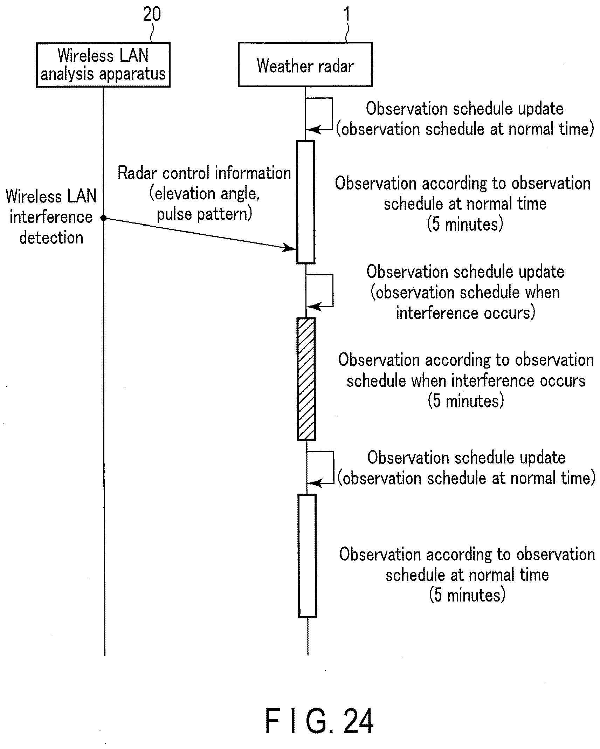

FIG. 24 is a diagram showing an example of a flow of switching an observation schedule between a normal time and a time when interference occurs. The weather radar 1 normally performs observation according to an observation schedule at a normal time, and when a series of observation schedules is completed, the observation schedule is updated each time. In the wireless LAN analysis apparatus 20, when interference of a wireless LAN is detected, radar control information (an elevation angle, a pulse pattern) is transmitted to the weather radar 1, and an observation schedule at a time when interference occurs is updated at the time of next update. Thereafter, a series of observation schedules is completed, and at the time of subsequent update, the schedule is updated to an observation schedule at a normal time and normal observation is performed.

As described above, in this embodiment, when a wireless LAN packet is received from a received signal of the weather radar 1, an IEEE802.11a preamble of this wireless LAN packet is detected. That is, when this preamble is detected, it is determined that radio wave interference due to a wireless LAN signal occurs. As a result, it is possible to provide an analysis apparatus, an analysis method, and a radar apparatus capable of detecting radio wave interference in a bonded channel and thus reliably detecting a radio wave interference source.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An analysis apparatus comprising:
an interface configured to acquire a received signal of a radar apparatus which transmits and receives a radar signal;
a signal receiver configured to detect a preamble part of a wireless LAN packet from the acquired received signal, and detect radio wave interference due to the wireless LAN in a band of the received signal; and
an analysis processor configured to, when the radio wave interference is detected, transmit to the radar apparatus radar control information for controlling a radio wave source which causes the radio wave interference.

2. The analysis apparatus according to claim 1,
wherein the signal receiver detects radio wave interference from a partial band of a bonded channel.

3. The analysis apparatus according to claim 1,
wherein the signal receiver detects the preamble part from a horizontal polarization component and a vertical polarization component of the acquired received signal.

4. The analysis apparatus according to claim 1,
wherein the analysis processor generates radar control information including a transmission elevation angle and a transmission pulse pattern.

5. The analysis apparatus according to claim 4,
wherein the analysis processor generates radar control information including a transmission pulse pattern common to a plurality of technical standards.

6. An analysis method executed by an analysis apparatus including an interface which acquires a received signal of a radar apparatus which transmits and receives a radar signal, the analysis method comprising:
detecting, by the analysis apparatus, a preamble part of a wireless LAN packet from the acquired received signal to detect radio wave interference due to the wireless LAN in a band of the received signal; and
when the radio wave interference is detected, transmitting, by the analysis apparatus, to the radar apparatus radar control information for controlling a radio wave source which causes the radio wave interference.

7. A radar apparatus comprising an analysis apparatus, the analysis apparatus comprising:
an interface configured to acquire a received signal of the radar apparatus;
a signal receiver configured to detect a preamble part of a wireless LAN packet from the acquired received signal to detect radio wave interference due to the wireless LAN in a band of the received signal; and
an analysis processor configured to, when the radio wave interference is detected, transmit to the radar apparatus radar control information for controlling a radio wave source which causes the radio wave interference.
